(19) Europäisches Patentamt

European Patent Office

Office européen des brevets

(11) **EP 1 064 474 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(21) Anmeldenummer: **00906151.6**

(22) Anmeldetag: **13.01.2000**

(51) Int Cl.⁷: **F16F 9/05**

(86) Internationale Anmeldenummer:
**PCT/DE2000/000102**

(87) Internationale Veröffentlichungsnummer:
**WO 2000/043692 (27.07.2000 Gazette 2000/30)**

(54) **LUFTFEDERSYSTEM**

PNEUMATIC SUSPENSION SYSTEM

SYSTEME D'AMORTISSEMENT PNEUMATIQUE

(84) Benannte Vertragsstaaten:
**AT BE CH CY DE DK ES FI FR GB GR IE IT LI LU MC NL PT SE**

(30) Priorität: **21.01.1999 DE 19902360**

(43) Veröffentlichungstag der Anmeldung:
**03.01.2001 Patentblatt 2001/01**

(73) Patentinhaber: **PHOENIX AKTIENGESELLSCHAFT
21079 Hamburg (DE)**

(72) Erfinder:
• **BRANCO, Antonio
D-21073 Hamburg (DE)**
• **SONNAK, Ulrich
D-21075 Hamburg (DE)**
• **WEBER, Michael
D-21244 Buchholz (DE)**

(56) Entgegenhaltungen:
| | |
|---|---|
| **EP-A- 0 062 112** | **EP-A- 0 953 787** |
| **DE-A- 2 750 666** | **DE-A- 4 135 900** |
| **DE-A- 19 719 505** | **US-A- 2 973 968** |
| **US-A- 4 504 079** | |

**Beschreibung**

Die Erfindung betrifft ein Luftfedersystem, bestehend aus folgenden Luftfederbauteilen, nämlich aus

- einem Luftfederbalg aus elastomerem Werkstoff, der eine Konturierung aufweist und eine volumenvariable Luftkammer einschließt, wobei der Luftfederbalg mit einem eingebetteten Festigkeitsträger versehen ist;

- einem Luftfederdeckel, umfassend einen ersten Befestigungsbereich mit einem Außendurchmesser, an dem das eine Ende des Luftfederbalges mittels eines Klemmringes oder dergleichen befestigt ist;

- einem Luftfederkolben, umfassend einen zweiten Befestigungsbereich mit einem Außendurchmesser an dem das andere Endes des Luftfederbalges ebenfalls mittels eines Klemmringes oder dergleichen befestigt ist, sowie einen Abrollkolben mit einem Außendurchmesser, an dessen Außenwand der Luftfederbalg unter Bildung einer Rollfalte abrollen kann;

- einer Außenführung für den Luftfederbalg; sowie aus

- einem statischen Bereich des Luftfederbalges, der sich beim ersten Befestigungsbereich beginnend zur Außenführung hin erstreckt, und zwar zumeist unter Vergrößerung des Außendurchmessers des Luftfederbalges.

Ein derartiger Luftfedersystem ist in den Offenlegungsschriften DE 197 19 505 A1 und DE 36 436 073A beschrieben. Dabei weicht der Luftfederbalg von der üblichen zylindrischen Form ab. Im Rahmen der Gesamtanordnung des Luftfederbalges treten Durchmesseränderungen auf, und zwar unter Bildung von zylindrischen, konischen und gekrümmten Konturbereichen (konturierter Luftfederbalg).

Der Festigkeitsträger kann in gekreuzter Anordnung vorliegen, beispielsweise unter Verwendung von zwei sich kreuzenden Cordgewebelagen (DE 41 36 460 A1; Fig. 2 und 3). Ein derartiger Luftfederbalg wird auch als Kreuzlagenbalg bezeichnet. Nach einer weiteren Variante kann der Festigkeitsträger in Form von axial verlaufenden Fadenverstärkungen auftreten (DE 36 43 073 A1; Fig. 1). Einen solchen Luftfederbalg nennt man auch Axialbalg.

Bei Luftfedersystemen mit Außenführung für den Luftfederbalg, wobei insbesondere Axialbälge Verwendung finden, treten bei einem drucklosen Betrieb unter Umständen unerwünschte Falten und Knicke auf, die die Lebensdauer vermindern können.

Vorteilhafte Ausführungsvarianten werden in den Patentansprüchen 2 bis 11 festgehalten, die nun näher vorgestellt werden.

Variante I

Der dynamische Bereich des Luftfederbalges verläuft im wesentlichen ausschließlich konisch.

Insbesondere mit dieser Variante geht der statische Bereich des Luftfederbalges ohne zylindrischen Zwischenbereich in den dynamischen Bereich des Luftfederbalges über.

Zwecks Vermeidung des oben genannten Problemkreises zeichnet sich das neue Luftfedersystem gemäß Kennzeichen des Patentanspruches 1 nun dadurch aus, daß

- der konturierte Luftfederbalg einen dynamischen Bereich umfaßt, der in Bezug auf das Luftfedersystem während der Ein- und Ausfederung im Bereich der Rollfalte eine Änderung des Durchmessers des Luftfederbalges erfährt, und zwar in Bezug auf den Außendurchmesser des Abrollkolbens, wobei bei der Einfederung eine Verkleinerung des Durchmessers und bei der Ausfederung eine Vergrößerung des Durchmessers des Luftfederbalges eintritt;

- der dynamische Bereich des Luftfederbalges in der entfalteten Lage im drucklosen Zustand wenigstens partiell einen konischen Verlauf aufweist; sowie

- die Außenführung in der ausgefederten Lage im wesentlichen den gesamten dynamischen Bereich des Luftfederbalges umschließt.

Variante II

Der dynamische Bereich des Luftfederbalges weist einen ersten konischen Bereich auf, der dann in einen mittigen zylindrischen Bereich übergeht und von dort aus schließlich wiederum in einen zweiten konischen Bereich übergeht, der am zweiten Befestigungsbereich endet. Dabei weist der erste konische Bereich eine größere Erstreckung auf als der mittige zylindrische Bereich. Der mittige zylindrische Bereich wiederum weist eine größere Erstreckung auf als der zweite konische Bereich.

Insbesondere mit dieser Variante geht der statische Bereich des Luftfederbalges in einen zylindrischen Zwischenbereich über, der ebenfalls statisch ist, wobei sich an diesen Zwischenbereich der dynamische Bereich des Luftfederbalges anschließt.

Unabhängig von diesen beiden Varianten verläuft der statische Bereich des Luftfederbalges zwischen dem ersten Befestigungsbereich und der Außenführung insbesondere im wesentlichen ausschließlich konisch.

Die beiden Varianten I und II als vorteilhafte Ausführungsbeispiele werden nun anhand von schematischen Zeichnungen noch etwas detaillierter beschrieben. Es zeigen:

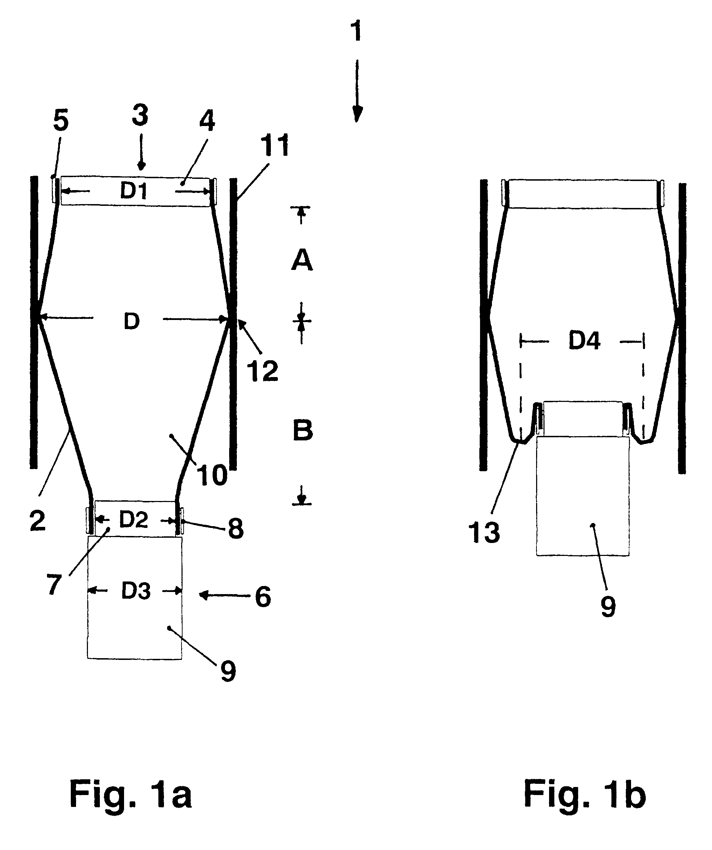

Fig. 1a    Luftfedersystem der Variante I in entfalteter Lage im drucklosen Zustand;

Fig. 1 b    Luftfedersystem der Variante I in teilweise eingefederter Lage im drucklosen Zustand;

Fig. 2a    Luftfedersystem der Variante II in entfalteter Lage im drucklosen Zustand;

Fig. 2b    Luftfedersystem der Variante II in teilweise eingefederter Lage im drucklosen Zustand.

In Verbindung mit diesen Figuren gilt folgende Bezugsziffernliste:

| | |
|---|---|
| **1,1'** | Luftfedersystem |
| **2, 2'** | konturierter Luftfederbalg |
| **3, 3'** | Luftfederdeckel |
| **4, 4'** | erster Befestigungsbereich |
| **5, 5'** | Klemmring |
| **6, 6'** | Luftfederkolben |
| **7, 7'** | zweiter Befestigungsbereich |
| **8, 8'** | Klemmring |
| **9, 9'** | Abrollkolben |
| **10, 10'** | volumenvariable Luftkammer |
| **11, 11'** | Außenführung |
| **12, 12'** | Kontaktbereich des Luftfederbalges zur Außenführung |
| **13, 13'** | Rollfalte des Luftfederbalges |
| **A** | statischer Bereich des Luftfederbalges |
| **A1** | " |
| **A2** | " |
| **B** | dynamischer Bereich des Luftfederbalges |
| **B1** | " |
| **B2** | " |
| **B3** | " |
| **D** | Außendurchmesser des Luftfederbalges |
| **D1** | Außendurchmesser des ersten Befestigungsbereiches |
| **D2** | Außendurchmesser des zweiten Befestigungsbereiches |
| **D3** | Außendurchmesser des Abrollkolbens |
| **D4** | Durchmesser des Luftfederbalges im Bereich der Rollfalte. |

Der Luftfederdeckel **3** des Luftfedersystems **1** gemäß Fig. 1a umfaßt einen ersten Befestigungsbereich **4** mit einem Außendurchmesser **D1**, an dem das eine Ende des Luftfederbalges **2** mittels eines Klemmringes **5** befestigt ist. Der dem Luftfederdeckel gegenüberliegende Luftfederkolben **6** besteht aus einem zweiten Befestigungsbereich **7** mit einem Außendurchmesser **D2**, an dem das andere Ende des Luftfederbalges **2** ebenfalls mittels eines Klemmringes **8** befestigt ist, sowie aus einem Abrollkolben **9** mit einem Außendurchmesser **D3**. Der Luftfederbalg umschließt dabei eine volumenvariable Luftkammer **10**. Hinsichtlich der Außendurchmesser **D1** und **D2** der beiden Befestigungsbereiche gelten insbesondere folgende Parameter:

$$D1 \geq D2.$$

Der Luftfederbalg **2** mit einem variablen Außendurchmesser **D** weist einen statischen Bereich **A** und einen dynamischen Bereich **B** auf, und zwar jeweils mit einem konischen Konturverlauf. Im Kontaktbereich **12** der Außenführung **11**, wo der Luftfederbalg **2** seinen größten Außendurchmesser **D** besitzt, geht der statische Bereich **A** ohne zylindrischen Zwischenbereich in den dynamischen Bereich **B** über. Innerhalb des dynamischen Bereiches **B** gelten für den Außendurchmesser **D** des Luftfederbalges vorzugsweise folgende Parameter, und zwar bezogen auf den Außendurchmesser **D3** des Abrollkolbens **9**:

**D** (maximal) = 1,2-fache von **D3** (insbesondere 1,15-fache von **D3**)
**D** (minimal) = **D3**     (insbesondere 1,05-fache von **D3**)

Diese Parameter gelten für die entfaltete Lage im drucklosen Zustand.

Die Außenführung **11**, die am Luftfederdeckel und/oder an einem karosseriefesten Bauteil und/oder am Luftfederbalg befestigt ist, umschließt im wesentlichen den größten Teil des dynamischen Bereiches **B** des Luftfederbalges **2**.

Im Zustand der entfalteten Lage im drucklosen Zustand gemäß Fig. 1a ist der dynamische Bereich **B** des Luftfederbalges **2** noch rollfaltenfrei.

Beim Luftfedersystem **1** gemäß Fig. 1b bildet sich im Rahmen der Einfederung innerhalb des dynamischen Bereiches unter Konturänderung des Luftfederbalges eine Rollfalte **13** aus, die an der Außenwand des Abrollkolbens **9** abrollen kann. Innerhalb des statischen Bereiches **A** tritt dagegen im Vergleich zum Zustand gemäß Fig. 1a im wesentlichen keine Konturänderung des Luftfederbalges auf.

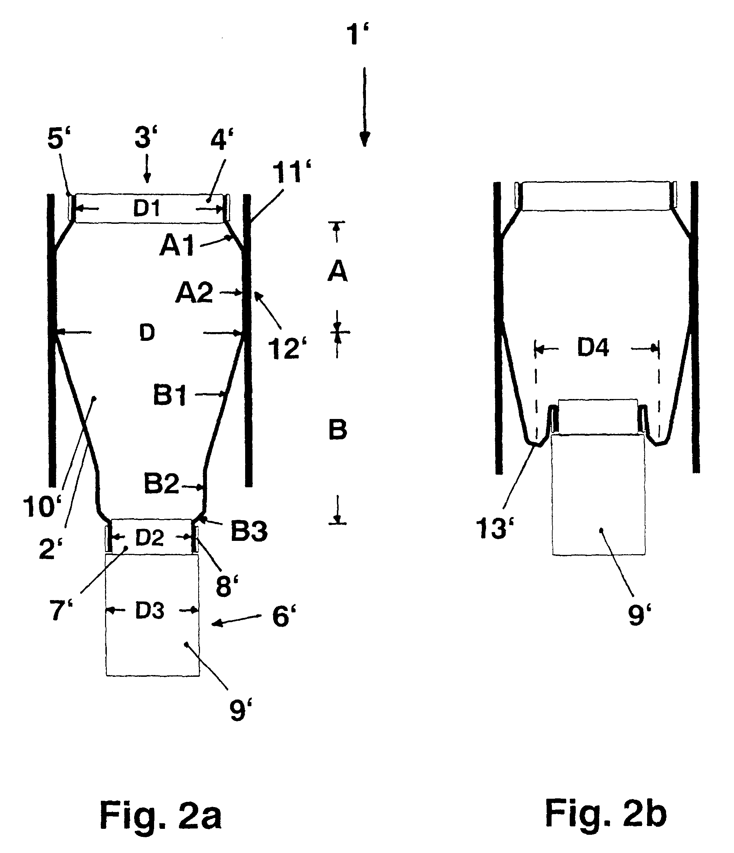

Der Luftfederbalg **2'** des Luftfedersystems **1'** gemäß Fig. 2a zeichnet sich nun durch eine weitere vorteilhafte Konturierung aus. Dabei besteht der gesamte statische Bereich **A** aus zwei Teilbereichen **A1** und **A2**, wobei der konische Teilbereich **A1** im Kontaktbereich **12'** der Außenführung **11'** in eine zylindrische Form übergeht. Der dynamische Bereich **B** weist hier einen ersten konischen Bereich **B1** auf, der sich bei der Außenführung **11'** beginnend in Richtung Luftfederkolben **6'** verjüngt, dann in einen mittigen zylindrischen Bereich **B2** übergeht und schließlich wiederum in einen zweiten konischen Bereich **B3** übergeht, der unter Verjüngung am zweiten Befestigungsbereich **7'** endet. Dabei weist der erste konische Bereich **B1** eine größere Erstreckung auf als der mittige zylindrische Bereich **B2**. Der mittige zylindrische Bereich **B2** wiederum weist eine größere Erstreckung auf als der zweite konische Bereich **B3**.

Im Zustand der entfalteten Lage im drucklosen Zustand gemäß Fig. 2a ist der dynamische Bereich **B** des Luftfederbalges **2'** auch hier noch rollfaltenfrei.

Beim Luftfedersystem 1' gemäß Fig. 2b bildet sich im Rahmen der Einfederung innerhalb des dynamischen Bereiches **B** unter Konturänderung des Luftfederbalges eine Rollfalte **13'** aus, die an der Außenwand des Abrollkolbens **9'** abrollen kann. Innerhalb des statischen Bereiches **A** tritt auch hier in Vergleich zum Zustand gemäß Fig. 2a im wesentlichen keine Konturänderung des Luftfederbalges auf.

Das Luftfedersystem 1 und 1'gemäß Fig. 1b bzw. 2b erfährt während der Ein- und Ausfederung im Bereich der Rollfalte **13** bzw. **13'** eine Änderung des Durchmessers **D4**, und zwar in Bezug auf den Außendurchmesser **D3** des Abrollkolbens **9** bzw. **9'**. Dabei tritt bei der Einfederung eine Verkleinerung des Durchmessers **D4** und bei der Ausfederung eine Vergrößerung des Durchmessers **D4** des Luftfederbalges ein.

## Patentansprüche

1. Luftfedersystem (1, 1'), bestehend mindestens aus folgenden Luftfederbauteilen, nämlich aus

   - einem Luftfederbalg (2, 2') aus elastomerem Werkstoff, der eine Konturierung aufweist und eine volumenvariable Luftkammer (10, 10') einschließt, wobei der Luftfederbalg mit einem eingebetteten Festigkeitsträger versehen ist, insbesondere in Form von axial verlaufenden Fadenverstärkungen;

   - einem Luftfederdeckel (3, 3'), umfassend einen ersten Befestigungsbereich (4, 4') mit einem Außendurchmesser (D1), an dem das eine Ende des Luftfederbalges (2, 2') mittels eines Klemmringes (5, 5') oder dergleichen befestigt ist;

   - einem Luftfederkolben (6, 6'), umfassend einen zweiten Befestigungsbereich (7, 7') mit einem Außendurchmesser (D2), an dem das andere Endes des Luftfederbalges(2, 2') ebenfalls mittels eines Klemmringes (8, 8') oder dergleichen befestigt ist, sowie einen Abrollkolben (9, 9') mit einem Außendurchmesser (D3), an dessen Außenwand der Luftfederbalg unter Bildung einer Rollfalte (13, 13') abrollen kann;

   - einer Außenführung (11, 11') für den Luftfederbalg (2, 2'); sowie aus

   - einem statischen Bereich (A) des Luftfederbalges (2, 2'), der sich beim ersten Befestigungsbereich (4, 4') beginnend zur Außenführung (11, 11') hin erstreckt, und zwar zumeist unter Vergrößerung des Außendurchmessers (D) des Luftfederbalges;

   **dadurch gekennzeichnet, daß**

2. Luftfedersystem nach Anspruch 1, **dadurch gekennzeichnet, daß** der dynamische Bereich (B) des Luftfederbalges (2) im wesentlichen ausschließlich konisch verläuft.

3. Luftfedersystem nach Anspruch 1, **dadurch gekennzeichnet, daß** der dynamische Bereich (B) des Luftfederbalges (2') einen ersten konischen Bereich (B1) aufweist, der dann in einen mittigen zylindrischen Bereich (B2) übergeht und von dort aus schließlich wiederum in einen zweiten konischen Bereich (B3) übergeht, der am zweiten Befestigungsbereich (7') endet.

4. Luftfedersystem nach Anspruch 3, **dadurch gekennzeichnet, daß** der erste konische Bereich (B1) eine größere Erstreckung aufweist als der mittige zylindrische Bereich (B2).

5. Luftfedersystem nach Anspruch 3 oder 4, **dadurch gekennzeichnet, daß** der mittige zylindrische Bereich (B2) eine größere Erstreckung aufweist als der zweite konische Bereich (B3).

   - der konturierte Luftfederbalg (2, 2') einen dynamischen Bereich (B) umfaßt, der in Bezug auf das Luftfedersystem (1, 1') während der Ein- und Ausfederung im Bereich der Rollfalte (13, 13') eine Änderung des Durchmessers (D4) des Luftfederbalges erfährt, und zwar in Bezug auf den Außendurchmesser (D3) des Abrollkolbens (9, 9'), wobei bei der Einfederung eine Verkleinerung des Durchmessers und bei der Ausfederung eine Vergrößerung des Durchmessers des Luftfederbalges eintritt;

   - der dynamische Bereich (B) des Luftfederbalges (2, 2') in der entfalteten Lage im drucklosen Zustand wenigstens partiell einen konischen Verlauf aufweist; sowie

   - die Außenführung (11, 11') in der ausgefederten Lage im wesentlichen den gesamten dynamischen Bereich (B) des Luftfederbalges (2, 2') umschließt.

6. Luftfedersystem nach einem der Ansprüche 1 bis 5, **dadurch gekennzeichnet, daß** innerhalb des dynamischen Bereiches (B) für den Außendurchmesser (D) des Luftfederbalges (2, 2') im Zustand der entfalteten Lage im drucklosen Zustand folgende Parameter gelten, und zwar bezogen auf den Außendurchmesser (D3) des Abrollkolbens (9, 9'):

D (maximal) = 1,2-fache von D3
D (minimal) = D3

**7.** Luftfedersystem nach einem der Ansprüche 1 bis 5, **dadurch gekennzeichnet, daß** innerhalb des dynamischen Bereiches (B) für den Außendurchmesser (D) des Luftfederbalges (2, 2') im Zustand der entfalteten Lage im drucklosen Zustand folgende Parameter gelten, und zwar bezogen auf den Außendurchmesser (D3) des Abrollkolbens (9, 9'):

D (maximal) = 1,15-fache von D3
D (minimal) = 1,05-fache von D3

**8.** Luftfedersystem nach einem der Ansprüche 1 bis 7, insbesondere in Verbindung mit Anspruch 2, **dadurch gekennzeichnet, daß** der statische Bereich (A) des Luftfederbalges (2) ohne zylindrischen Zwischenbereich in den dynamischen Bereich (B) des Luftfederbalges übergeht.

**9.** Luftfedersystem nach einem der Ansprüche 1 bis 7, insbesondere in Verbindung mit einem der Ansprüche 3 bis 5, **dadurch gekennzeichnet, daß** der statische Bereich (A) des Luftfederbalges (2') in einen zylindrischen Zwischenbereich (A2) übergeht, der ebenfalls statisch ist, wobei sich an diesen Zwischenbereich (A2) der dynamische Bereich (B) des Luftfederbalges anschließt.

**10.** Luftfedersystem nach einem der Ansprüche 1 bis 9, **dadurch gekennzeichnet, daß** der statische Bereich (A, A1) des Luftfederbalges (2, 2') zwischen dem ersten Befestigungsbereich (4, 4') und der Außenführung (11, 11') im wesentlichen ausschließlich konisch verläuft.

**11.** Luftfedersystem nach einem der Ansprüche 1 bis 10, **dadurch gekennzeichnet, daß** für den Außendurchmesser (D1) des ersten Befestigungsbereiches (4, 4') und den Außendurchmesser (D2) des zweiten Befestigungsbereiches (7, 7') folgende Parameter gelten:

$$D1 \geq D2$$

## Claims

**1.** Air spring system (1, 1'), consisting of at least the following air spring components, namely of

- an air spring bellows (2, 2') made of elastomer material which exhibits contouring and encloses a variable-volume air chamber (10, 10'), the air spring bellows being provided with an embedded strength member, in particular in the form of thread reinforcements running axially;
- an air spring cover (3, 3'), comprising a first fastening area (4, 4') with an outside diameter (D1) to which one end of the air spring bellows (2, 2') is fastened by means of a clamping ring (5, 5') or the like;
- an air spring piston (6, 6'), comprising a second fastening area (7, 7') with an outside diameter (D2) to which the other end of the air spring bellows (2, 2') is fastened also by means of a clamping ring (8, 8') or the like, and a rolling piston (9, 9') with an outside diameter (D3) on whose external wall the air spring bellows can roll forming a rolling fold (13, 13');
- an external guide (11, 11') for the air spring bellows (2, 2'); and
- a static area (A) of the air spring bellows (2, 2') which starts from the first fastening area (4, 4') and extends to the external guide (11, 11'), usually with the outside diameter (D) of the air spring bellows increasing;

**characterised in that**

- the contoured air spring bellows (2, 2') comprises a dynamic area (B) which during compression and extension undergoes a change in the diameter (D4) of the air spring bellows in the area of the rolling fold (13, 13') in relation to the air spring system (1, 1'), in particular in relation to the outside diameter (D3) of the rolling piston (9, 9'), a reduction in the diameter of the air spring bellows occurring during compression and an increase in the diameter during extension;
- the dynamic area (B) of the air spring bellows (2, 2') exhibits at least in part a conical form in the unfolded position in the pressureless state; and
- the external guide (11, 11') essentially embraces the entire dynamic area (B) of the air spring bellows (2, 2') in the extended position.

**2.** Air spring system according to claim 1, **characterised in that** the dynamic area (B) of the air spring bellows (2) essentially runs entirely conically.

**3.** Air spring system according to claim 1, **characterised in that** the dynamic area (B) of the air spring bellows (2') exhibits a first conical area (B1) which then passes into a central cylindrical area (B2) and from there finally again passes into a second conical area (B3) which ends at the second fastening area (7').

**4.** Air spring system according to claim 3, **characterised in that** the first conical area (B1) exhibits a greater extension than the central cylindrical area (82).

**5.** Air spring system according to claim 3 or 4, **characterised in that** the central cylindrical area (B2) exhibits a greater extension than the second conical area (B3).

**6.** Air spring system according to one of claims 1 to 5, **characterised in that** inside the dynamic area (B) the following parameters apply for the outside diameter (D) of the air spring bellows (2, 2') in the state of the unfolded position in the pressureless state, in relation to the outside diameter (D3) of the rolling piston (9, 9'):

$$D \text{ (maximum)} = 1.2 \text{ times } D3$$
$$D \text{ (minimum)} = D3$$

**7.** Air spring system according to one of claims 1 to 5, **characterised in that** inside the dynamic area (B) the following parameters apply for the outside diameter (D) of the air spring bellows (2, 2') in the state of the unfolded position in the pressureless state, in relation to the outside diameter (D3) of the rolling piston (9, 9'):

$$D \text{ (maximum)} = 1.15 \text{ times } D3$$
$$D \text{ (minimum)} = 1.05 \text{ times } D3$$

**8.** Air spring system according to one of claims 1 to 7, in particular in connection with claim 2, **characterised in that** the static area (A) of the air spring bellows (2) passes into the dynamic area (B) of the air spring bellows without any cylindrical intermediate area.

**9.** Air spring system according to one of claims 1 to 7, in particular in connection with one of claims 3 to 5, **characterised in that** the static area (A) of the air spring bellows (2') passes into a cylindrical intermediate area (A2) which is also static, the dynamic area (B) of the air spring bellows adjoining this intermediate area (A2).

**10.** Air spring system according to one of claims 1 to 9, **characterised in that** the static area (A, A1) of the air spring bellows (2, 2') between the first fastening area (4, 4') and the external guide (11, 11') essentially runs exclusively conically.

**11.** Air spring system according to one of claims 1 to 10, **characterised in that** the following parameters apply for the outside dynamic (D1) of the first fastening area (4, 4') and the outside diameter (D2) of the second fastening area (7, 7'):

$$D1 \geq D2.$$

## Revendications

**1.** Système d'amortissement pneumatique (1, 1'), composé au moins des composants de ressort pneumatique suivants, précisément, d'

- un soufflet de ressort pneumatique (2, 2') en matériau élastomère, présentant un profilage et incluant une chambre à air (10, 10') à volume variable, le soufflet de ressort pneumatique étant muni d'un support de résistance incorporé, en particulier se présentant sous la forme de renforcement par des fils, s'étendant axialement ;
- un couvercle de ressort (3, 3'), comprenant une première zone de fixation (4, 4'), d'un diamètre extérieur (D1), sur laquelle une première extrémité du soufflet de ressort pneumatique (2, 2') est fixée, à l'aide d'une bague de serrage (5, 5') ou analogue ;
- un piston de ressort pneumatique (6, 6'), comprenant une deuxième zone de fixation (7, 7') d'un diamètre extérieur (D2), à laquelle est fixée l'autre extrémité du soufflet de ressort pneumatique (2, 2'), également à l'aide d'une bague de serrage (8, 8') ou analogue, ainsi qu'un piston à déroulement (9, 9') d'un diamètre extérieur (D3), sur la paroi extérieure duquel le soufflet de ressort pneumatique peut rouler en formant un pli roulant (13, 13') ;
- un guidage extérieur (11, 11'), pour le soufflet de ressort pneumatique (2, 2'), ainsi que d'
- une zone statique (A) du soufflet de ressort pneumatique (2, 2'), s'étendant à la première zone de fixation (4, 4'), en commençant au guidage extérieur (11, 11') et, précisément, en majeure partie avec augmentation du diamètre extérieur (D) du soufflet de ressort pneumatique ;

**caractérisé en ce que**

- le soufflet de ressort pneumatique (2, 2') profilé comprend une zone (B) dynamique qui, en se référant au système de ressort pneumatique (1, 1') pendant l'écrasement et le déploiement élastique, dans la zone des plis roulants (13, 13'), subit une modification du diamètre (D4) du soufflet de ressort pneumatique (D) et, précisément, en référence au diamètre extérieur (D3) du piston de déroulement (9, 9'), sachant que, lors de l'écrasement élastique, une diminution du diamètre du soufflet de ressort pneumatique se produit, et en cas de déploiement élastique, un grossissement du diamètre du soufflet de ressort pneumatique se produit ;

- la zone (B) dynamique du soufflet de ressort pneumatique (2, 2'), à la position déployée, présente, à l'état sans pression, au moins partiellement une allure conique ; et
- le guidage extérieur (11, 11'), à la position déployée élastiquement, entoure pratiquement l'ensemble de la zone (B) dynamique du soufflet de ressort pneumatique (2, 2').

2. Système de suspension pneumatique selon la revendication 1, **caractérisé en ce que** la zone (B) dynamique du soufflet de ressort pneumatique (2) s'étend pratiquement exclusivement de façon conique.

3. Système de suspension pneumatique selon la revendication 1, **caractérisé en ce que** la zone (B) dynamique du soufflet de ressort pneumatique (2') présente une première zone conique (B1), qui se transforme ensuite en une zone (B2) centrale cylindrique et, de là, enfin, se transforme de nouveau en une deuxième zone conique (B3), s'achevant à la deuxième zone de fixation (7').

4. Système de suspension pneumatique selon la revendication 3, **caractérisé en ce que** la première zone conique (B1) présente une plus grande étendue que la zone (B2) cylindrique centrale.

5. Système de suspension pneumatique selon la revendication 3 ou 4, **caractérisé en ce que** la zone (B2) cylindrique centrale présente une plus grande étendue que la deuxième zone conique (B3).

6. Système de suspension pneumatique selon l'une des revendications 1 à 5, **caractérisé en ce que**, à l'intérieur de la zone (B) dynamique, pour le diamètre extérieur (D) du soufflet de ressort pneumatique (2, 2'), lorsque l'on est à la position déployée, à l'état sans pression, on a les paramètres suivants et, précisément, en se référant au diamètre extérieur (D3) du piston de déroulement (9, 9') :

$$D(maximal) = 1,2 \text{ fois } D3$$
$$D(minimal) = D3$$

7. Système de suspension pneumatique selon l'une des revendications 1 à 5, **caractérisé en ce que**, à l'intérieur de la zone (B) dynamique, pour le diamètre extérieur (D) du soufflet de ressort pneumatique (2, 2'), lorsque l'on est à la position déployée, et à l'état sans pression, on a les paramètres suivants et, précisément, en se référant au diamètre extérieur (D3) du piston de déroulement (9, 9') :

$$D(maximal) = 1,15 \text{ fois } D3$$
$$D(minimal) = 1,05 \text{ fois } D3$$

8. Système de suspension pneumatique selon l'une des revendications 1 à 7, en particulier en liaison avec la revendication 2, **caractérisé en ce que** la zone statique (A), du soufflet de ressort pneumatique (2), se transforme, sans zone intermédiaire cylindrique, en la zone (B) dynamique du soufflet de ressort pneumatique.

9. Système de suspension pneumatique selon l'une des revendications 1 à 7, en particulier en liaison avec l'une des revendications 3 à 5, **caractérisé en ce que** la zone (A) statique du soufflet de ressort pneumatique (2') se transforme en une zone intermédiaire (A2) cylindrique, qui est également statique, sachant que la zone (B) dynamique du soufflet de ressort pneumatique se raccorde à cette zone intermédiaire (A2).

10. Système de suspension pneumatique selon l'une des revendications 1 à 9, **caractérisé en ce que** la zone (A, A1 ) statique du soufflet de ressort pneumatique (2, 2'), entre la première zone de fixation (4, 4') et le guidage extérieur (11, 11'), est d'une allure pratiquement exclusivement conique.

11. Système de suspension pneumatique selon l'une des revendications 1 à 10, **caractérisé en ce que**, pour le diamètre extérieur (D1), de la première zone de fixation (4, 4'), et le diamètre extérieur (D2), de la deuxième zone de fixation (7, 7'), valent les paramètres suivants :

$$D1 \geq D2$$

**Fig. 1a**

**Fig. 1b**

**Fig. 2a**

**Fig. 2b**